Europäisches Patentamt

European Patent Office

Office européen des brevets

(11) Veröffentlichungsnummer: **0 445 512 A2**

# (12) EUROPÄISCHE PATENTANMELDUNG

(21) Anmeldenummer: **91100877.9**

(22) Anmeldetag: **24.01.91**

(51) Int. Cl.⁵: **B29C  47/14**, B29C 69/00

(30) Priorität: **07.03.90 DE 4007235**

(43) Veröffentlichungstag der Anmeldung:
**11.09.91 Patentblatt  91/37**

(84) Benannte Vertragsstaaten:
**AT BE CH DE DK ES FR GB GR IT LI LU NL SE**

(71) Anmelder: **W. Döllken & Co GmbH**
**Ruhrtalstrasse 71**
**W-4300 Essen 16(DE)**

(72) Erfinder: **Pfülb, Roland**
**Dahlienweg 20**
**W-5628 Heiligenhaus-Isenbügel(DE)**
Erfinder: **Müller, Herbert, Dr.**
**Laupendahler Weg 23a**
**W-5628 Heiligenhaus-Isenbügel(DE)**

(74) Vertreter: **Andrejewski, Walter, Dipl.-Phys. Dr.**
**et al**
**Patentanwälte Andrejewski, Honke & Masch**
**Postfach 10 02 54 Theaterplatz 3**
**W-4300 Essen 1(DE)**

(54) **Vorrichtung für die Herstellung von Flachprofilen aus thermoplastischem Kunststoff.**

(57) Vorrichtung für die Herstellung von Flachprofilen vorgegebener Profilbreite aus thermoplastischem Kunststoff, - mit einem Strangpreßwerkzeug, welches an einen Extruder der für die Aufbereitung des thermoplastischen Kunststoffes anschließbar ist und welches eine Langschlitzdüse mit einem oberen Düsenbauteil und einem unteren Düsenbauteil aufweist. Die Langschlitzdüse besitzt einen Düsenschlitz von einer Länge, die einem Vielfachen der Profilbreite der herzustellenden Flachprofile entspricht. An das obere und/oder an das untere Düsenbauteil ist eine Schneidvorrichtung angeschlossen, die eine Mehrzahl von Schneidmessern aufweist, welche quer zum Düsenschlitz verlaufen und vor dem Düsenschlitz angeordnet sind. Die Schneidmesser sind in Längsrichtung des Düsenschlitzes auf unterschiedliche Profilbreite einstellbar.

Fig.1

Die Erfindung betrifft eine Vorrichtung für die Herstellung von Flachprofilen vorgegebener Profilbreite aus thermoplastischem Kunststoff, - mit einem Strangpreßwerkzeug, welches an einen Extruder für die Aufbereitung des thermoplastischen Kunststoffes angeschlossen ist, und welches eine Langschlitzdüse mit einem oberen Düsenbauteil sowie einem unteren Düsenbauteil aufweist. - Es versteht sich, daß es sich bei dem Strangpreßwerkzeug im allgemeinen um ein geteiltes Aggregat aus Werkzeugoberteil und Werkzeugunterteil handelt. Entsprechend sind auch das untere Düsenbauteil und das obere Düsenbauteil zu einem Aggregat vereinigt. Der Ausdruck Flachprofil schließt nicht aus, daß die Oberfläche der Profile eine besondere Struktur aufweist, beispielsweise in Längsrichtung gerillt ist. Auch kann es sich um die Herstellung von sogenannten marmorierten Flachprofilen handeln. Flachprofile werden insbesondere als Kantenbänder in der Möbelindustrie und dergleichen eingesetzt.

Bei der aus der Praxis bekannten Vorrichtung, von der die Erfindung ausgeht, ist die Weite des Düsenschlitzes zum Zwecke der Herstellung von Flachprofilen unterschiedlicher Dicke einstellbar, die Flachprofile werden jedoch mit einer Profilbreite hergestellt, die durch die Länge des Düsenschlitzes vorgegeben ist. Allerdings sind auch Vorrichtungen des eingangs beschriebenen Aufbaus bekannt, bei denen zum Zwecke der Herstellung von Flachprofilen unterschiedlicher Profilbreite Düsenbauteile austauschbar sind und die austauschbaren Düsenbauteile unterschiedlich lange Düsenschlitze bilden.

Hier ist aufwendig, daß bei der Herstellung einer Vielzahl von Flachprofilen unterschiedlicher Profilbreite in aufwendiger Weise ein großer Satz von Düsenbauteilen hergestellt und auf Lager gehalten werden muß. Andererseits verlangt der Markt, insbesondere für die Verwendung als Kantenbänder, sehr unterschiedliche Profilbreiten.

Der Erfindung liegt die Aufgabe zugrunde, eine Vorrichtung des eingangs beschriebenen Aufbaus so weiter auszubilden, daß auf einfache Weise und ohne Austausch von Düsenbauteilen Flachprofile sehr unterschiedlicher Profilbreite hergestellt werden können.

Zur Lösung dieser Aufgabe lehrt die Erfindung, daß die Langschlitzdüse einen Düsenschlitz von einer Länge aufweist, die einem Vielfachen der Profilbreite der herzustellenden Flachprofile entspricht, daß an das obere und/oder an das untere Düsenbauteil eine Schneidvorrichtung angeschlossen ist, die eine Mehrzahl von Schneidmessern aufweist, die quer zum Düsenschlitz verlaufen und vor dem Düsenschlitz angeordnet sind, und daß die Schneidmesser in Längsrichtung des Düsenschlitzes auf unterschiedliche Profilbreite einstellbar sind. - Die Erfindung nutzt die Erkenntnis, daß ein stranggepreßtes Flachprofil aus thermoplastischem Kunststoff beim Austritt aus dem Düsenschlitz oder unmittelbar im Anschluß aus dem Düsenschlitz leicht in Teilprofile aufgeteilt werden kann wenn dazu eine Schneidvorrichtung eingesetzt wird, wie sie vorstehend beschrieben wurde. Dann sind auf einfache Weise auch Flachprofile unterschiedlicher Profilbreite herstellbar, indem die Schneidmesser der Schneidvorrichtung in Längsrichtung des Düsenschlitzes verstellt werden. Es versteht sich, daß die Schneidmesser oder einzelne davon auch entfernt werden können, so daß ein Flachprofil entsteht, dessen Breite der Länge der Langschlitzdüse entspricht.

Im einzelnen bestehen im Rahmen der Erfindung mehrere Möglichkeiten der weiteren Ausbildung und Gestaltung. Eine bevorzugte Ausführungsform der Erfindung ist dadurch gekennzeichnet, daß die Schneidmesser in Messerblöcken auswechselbar gehalten sind. Auf diese Weise können die Schneidmesser, beispielsweise zum Zwecke des Schleifens, entfernt und durch andere ersetzt werden. Die erfindungsgemäße Vorrichtung kann so eingerichtet werden, daß Flachprofile diskreter Breiten wahlweise hergestellt werden können. Dazu lehrt die Erfindung, daß die Messerblöcke an dem oberen und/oder an dem unteren Düsenbauteil umsetzbar sind. Zum Zwecke der Umsetzung sind entsprechende Aufnahmen oder Bohrungen vorgesehen. Aber auch eine kontinuierliche Einstellung der Profilbreite ist möglich. Dazu lehrt die Erfindung, daß die Messerblöcke in Führungen in Längsrichtung des Düsenschlitzes verschiebbar und festsetzbar sind. Im Rahmen der Erfindung liegt es, daß das obere und/oder das untere Düsenbauteil im Bereich des Düsenschlitzes Düsenzungen aufweisen, die zur Einstellung der Dicke der Flachprofile verstellbar sind, beispielsweise dazu von entsprechenden Einstellschrauben beaufschlagbar sind. Die Verstellung erfolgt zweckmäßigerweise durch elastische Verformung. In diesem Zusammenhang nutzt die Erfindung die Tatsache, daß der Druck des thermoplastischen Kunststoffes in dem Werkzeug und auch im Düsenkanal zwischen den Düsenbauteilen in unmittelbarer Nähe des Düsenschlitzes bereits so weit abgefallen ist, daß durch die Trennschlitze zwischen den Düsenzungen thermoplastifizierter Kunststoff in störendem Maße nicht austritt und die Oberfläche der Flachprofile insoweit keine störende Texturierung erfährt.

Im folgenden wird die Erfindung anhand einer lediglich ein Ausführungsbeispiel darstellenden Zeichnung ausführlicher erläutert. Es zeigen in schematischer Darstellung:

Fig. 1 die Stirnansicht einer erfindungsgemäßen Vorrichtung,

Fig. 2    eine Draufsicht auf den Gegenstand nach Fig. 1,

Fig. 3    eine andere Ausführungsform des Gegenstandes der Fig. 1.

Die in den Figuren dargestellte Vorrichtung dient für die Herstellung von Flachprofilen F vorgegebener Profilbreite B aus thermoplastischem Kunststoff. Zum grundsätzlichen Aufbau gehört ein Strangpreßwerkzeug 1, welches an einen Extruder, d. h. an eine Schneckenstrangpresse 2, für die Aufbereitung des thermoplastischen Kunststoffes anschließbar ist. Das Strangpreßwerkzeug 1 besitzt eine Langschlitzdüse 3 mit einem oberen Düsenbauteil 4 sowie einem unteren Düsenbauteil 5.

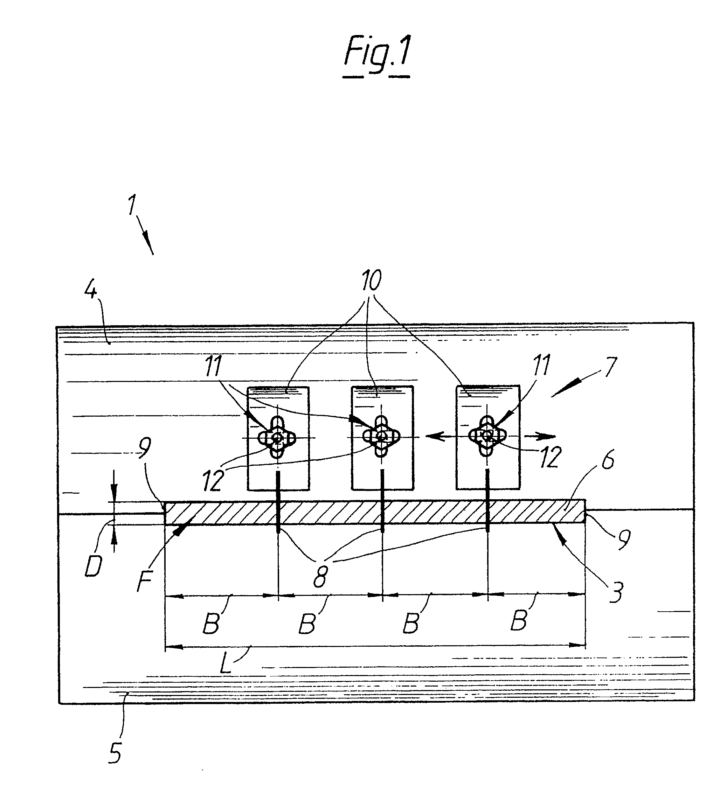

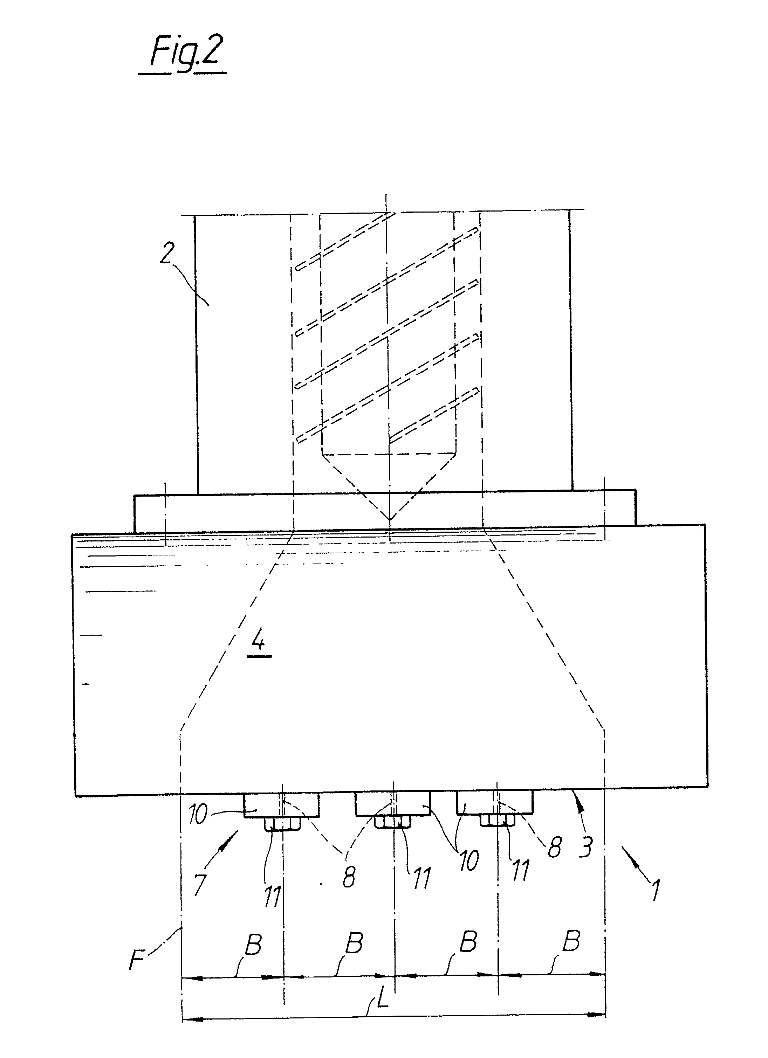

Die Langschlitzdüse 3 ist mit einem Düsenschlitz 6 von einer Länge L versehen, die einem Vielfachen der Profilbreite B des herzustellenden Flachprofiles F entspricht. Aus einer vergleichenden Betrachtung der Fig. 1 und 2 entnimmt man, daß an das obere und/oder an das untere Düsenbauteil 4, 5 eine Schneidvorrichtung 7 angeschlossen ist, die eine Mehrzahl von Schneidmessern 8 aufweist. Diese erstrecken sich quer zum Düsenschlitz 6 und sind vor dem Düsenschlitz 6 angeordnet. Sie schließen insoweit an die Düsenbauteile 4, 5 an. Die Schneidmesser 8 sind in Längsrichtung des Düsenschlitzes 6 auf unterschiedliche Profilbreite B einstellbar, so daß zwischen den Messern 8 bzw. zwischen der äußeren Begrenzung 9 des Düsenschlitzes 6 und den Messern 8 Flachprofile F unterschiedlicher Profilbreite B hergestellt werden können.

Im Ausführungsbeispiel und nach bevorzugter Ausführungsform der Erfindung sind die Schneidmesser 8 in Messerblöcken 10 auswechselbar gehalten. Bei der Ausführungsform nach den Fig. 1 und 2 sind die Messerblöcke 10 an dem oberen und/oder unteren Düsenbauteil 4, 5 umsetzbar befestigt. Die Befestigung erfolgt mit Hilfe von Schraubenbolzen 11, entsprechende Bohrungen 12 sind an den Düsenbauteilen 4, 5 vorgesehen und in der Fig. 1 angedeutet.

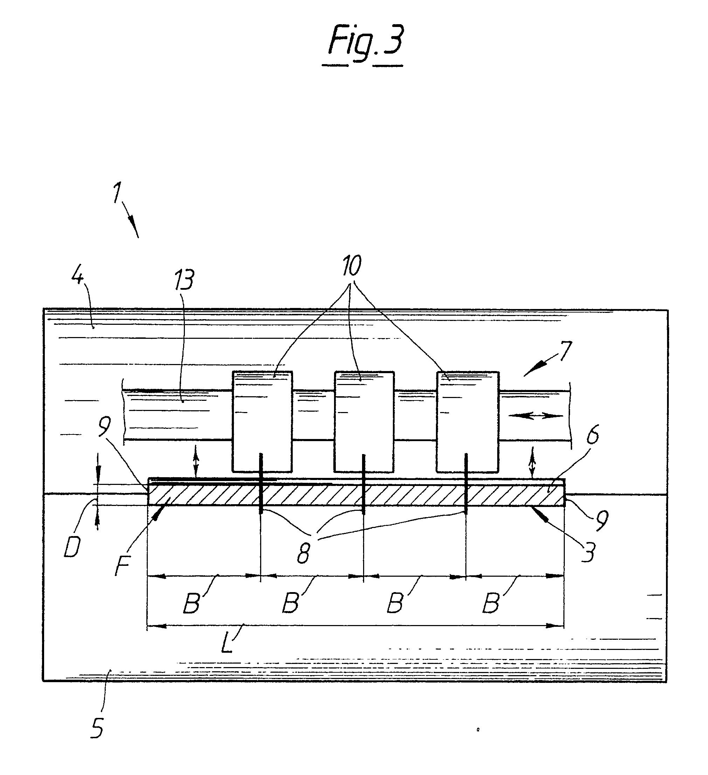

Bei der Ausführungsform nach Fig. 3 sind die Messerblöcke 10 in Führungen 13 verschiebbar und festsetzbar. - Nicht dargestellt wurde, daß das obere Düsenbauteil 4 im Bereich des Düsenschlitzes 6 Düsenzungen aufweisen kann, die zur Einstellung der Dicke D des Flachprofiles F verstellbar sind. Eine solche Verstellung wurde in der Fig. 3 durch Pfeile angedeutet, im konstruktiven Detail aber nicht dargestellt.

## Patentansprüche

1.  Vorrichtung für die Herstellung von Flachprofilen vorgegebener Profilbreite aus thermoplastischem Kunststoff, - mit

    einem Strangpreßwerkzeug, welches an einen Extruder

    für die Aufbereitung des thermoplastischen Kunststoffes

    anschließbar ist,

    und welches eine Langschlitzdüse mit einem oberen Düsenbauteil und einem unteren Düsenbauteil aufweist, **dadurch gekennzeichnet,** daß die Langschlitzdüse (3) einen Düsenschlitz (6) von einer Länge (L) besitzt, die einem Vielfachen der Profilbreite (B) der herzustellenden Flachprofile (F) entspricht, daß an das obere und/oder an das untere Düsenbauteil (4, 5) eine Schneidvorrichtung (7) angeschlossen ist,

    die eine Mehrzahl von Schneidmessern (8) aufweist,

    welche quer zum Düsenschlitz (6) verlaufen und vor

    dem Düsenschlitz (6) angeordnet sind,

    und daß die Schneidmesser (8) in Längsrichtung des Düsenschlitzes (6) auf unterschiedliche Profilbreite (B) einstellbar sind.

2.  Vorrichtung nach Anspruch 1, dadurch gekennzeichnet, daß die Schneidmesser (8) in Messerblöcken (10) auswechselbar gehalten sind.

3.  Vorrichtung nach einem der Ansprüche 1 oder 2, dadurch gekennzeichnet, daß die Messerblöcke (10) an dem oberen und/ oder unteren Düsenbauteil (4, 5) umsetzbar sind.

4.  Vorrichtung nach einem der Ansprüche 1 oder 2, dadurch gekennzeichnet, daß die Messerblöcke (10) in Führungen (13) in Längsrichtung des Düsenschlitzes (6) verschiebbar und festsetzbar sind.

5.  Vorrichtung nach einem der Ansprüche 1 bis 4, dadurch gekennzeichnet, daß das obere und/oder untere Düsenbauteil (4, 5) zumindest im Bereich des Düsenschlitzes (6) Düsenzungen (14) aufweisen, die zur Einstellung der Dicke (D) der Flachprofile (F) verstellbar sind.

EP 0 445 512 A2

Fig.1

# Fig.2

## Fig. 3